# EUROPEAN PATENT SPECIFICATION

(11) **EP 2 852 532 B1**
(45) Date of publication and mention of the grant of the patent: **06.09.2017**
(21) Application number: 13729505.1
(22) Date of filing: 23.05.2013
(51) Int. Cl.: B65B 57/02, G01N 21/952, B07C 5/342, B65B 57/00

(54) **WRAPPED-PRODUCT QUALITY CONTROL AND PACKING METHODS, AND WRAPPED-PRODUCT QUALITY CONTROL AND PACKING DEVICES**
VERFAHREN ZUR QUALITÄTSKONTROLLE UND ZUM VERPACKEN FÜR EIN EINGEHÜLLTES PRODUKT UND VORRICHTUNGEN ZUR QUALITÄTSKONTROLLE UND ZUM VERPACKEN FÜR EIN EINGEHÜLLTES PRODUKT
PROCÉDÉS DE CONTRÔLE DE QUALITÉ ET DE CONDITIONNEMENT DE PRODUIT EMBALLÉ, ET DISPOSITIFS DE CONTRÔLE DE QUALITÉ ET DE CONDITIONNEMENT DE PRODUIT EMBALLÉ

(30) Priority: 23.05.2012 US 201261650688 P; 21.06.2012 NL 2009043
(43) Date of publication of application: 01.04.2015
(73) Proprietor: Blueprint Holding B.V., 3446 CH Woerden (NL)
(72) Inventor: CROMPTON, Joseph, Superior, Colorado 80027 (US); PRAKKEN, Nicolaas Martin, Chester, Virginia 23836 (US)
(74) Representative: Nederlandsch Octrooibureau
(86) International application number: PCT/NL2013/050373
(87) International publication number: WO 2013/176544

(56) References cited:
- DE-A1- 4 243 206
- US-A- 5 628 409
- US-A1- 2006 244 954
- US-A1- 2010 018 154
- US-B2- 7 693 331

## Description

### FIELD OF THE INVENTION

The present invention relates to wrapped-product quality control and packing methods, and wrapped-product quality control and packing devices.

### BACKGROUND OF THE INVENTION

Generally products, like ice creams, can be packed in a wrapper, such as a plastic or paper-like sheet or box. One or a multiple of such wrapped products may be packed in a packing container, like a cardboard box or a flexible bag. When producing the product, or during its wrapping or transport the product may become damaged or otherwise not satisfy certain quality standards with respect to its appearance or integrity. A wrapper may even not contain a product. One therefore likes to do a quality check of the wrapped product, which can be done just before packing the wrapped product into a packing container, or can be combined with packing into the packing container. When the product concerns an ice cream, for instance, it might be cracked or broken into parts. In case of an ice cream on one or more sticks, such stick may not be inserted properly into the ice cream, it may be broken, or stick out of the wrapper. One likes to prevent such wrapped products of insufficient quality from being packed in a packing container and shipped for sale. However, such an integrity check for quality control purposes is not readily available.

US 2010/0018154 A1 discloses a thermoforming machine for placing and conditioning products within packages such as a blister pack. The machine comprises a viewing station for taking images of the packages for quality control of the packages itself, but does not provide for quality control of the product and/or the product in relation with its package.

### SUMMARY OF THE INVENTION

It is therefore an aim of the invention to provide a quality control method that can be easily integrated in the handling process of wrapped products by providing a wrapped-product control method comprising providing a wrapped product comprising a product in a wrapper; supplying said wrapped product on a measuring background in a capture range of an infrared-sensitive imaging device, said product having a product temperature different from a measuring background temperature of said measuring background, and said wrapper having a wrapper temperature; capturing with said infrared-sensitive imaging device infrared radiation from said wrapped product and said measuring background; providing an image of said product and/or of said wrapped product from said infrared radiation captured with said infrared-sensitive imaging device; and analysing said image for quality control of said wrapped product.

Part of the wrapper not in contact with the product will generally have a temperature not equal to the product, which causes such part of the wrapper to radiate infrared radiation having certain spectral distribution that is different from a spectral distribution of infrared radiation radiated by the product and part of the wrapper in contact with the product. The method allows discriminating the product from its wrapper and therefore a view on an image of the product so that the product can be quality checked.

On the other hand the spectral distribution of infrared radiation radiated from said product and its wrapper can both be different from the measuring background, which allows discriminating product and wrapper from the background and therefore a view on a combined image of product and wrapper for a further quality check of the wrapped product.

In an advantageous embodiment of the wrapped-product control method said wrapped product is supplied on a conveyer, said conveyer providing said measuring background. The wrapper will be in contact with the conveyer and the surroundings thereof, and the part of the wrapper not in contact with the product will take the temperature of the conveyer to provide a temperature difference between such part of the wrapper and the product for a good discrimination of product from wrapper.

In another advantageous embodiment said wrapped product is supplied by a conveyer with an open structure over a measuring surface having a temperature different from said product temperature and different from a temperature of said conveyer, said measuring surface providing said measuring background through said open structure of said conveyer. When provided onto the measuring surface from the conveyer, part of the wrapper not in contact with the product will still have or be close to the temperature of the conveyer. Measuring surface, part of the wrapper not in contact with the product, and the product will have different temperatures and will thus radiate infrared radiation with different spectral distributions. They can therefore be easily discriminated from one another.

In yet another advantageous embodiment said step of supplying said wrapped product is performed shortly after said product has been wrapped in said wrapper such that said wrapper temperature is different from said product temperature. This allows an straightforward discrimination of product and wrapper due to their temperature difference. Having a short time period between wrapping and measuring results in the wrapper end the product having different temperatures, which makes the discrimination easier.

In a preferred embodiment of the wrapped-product control method said step of providing said image comprises dividing an area captured by said infrared-sensitive imaging device into a two-dimensional matrix of pixels; assigning a pixel temperature to each pixel based on a measured distribution of infrared radiation associated with said pixel; selecting a threshold temperature in between said product temperature and said wrapper temperature or in between said wrapper temperature and said measuring background temperature, said product temperature being in a product temperature range that at one end is delimited by said threshold temperature; selecting pixels having an associated pixel temperature being in said product temperature range; and building said image from said selected pixels. Such embodiment provides an efficient and reliable manner or providing images of the product or the wrapped product for quality control purposes.

In yet another preferred embodiment said step of analysing comprises comparing said image with a reference image. Such embodiment provides an efficient and reliable manner of analysing the image for the intended quality control purposes.

In another aspect the invention provides a wrapped-product packing method for packing a wrapped product into a packing container, said method comprising the wrapped product quality control method according to the invention; packing said wrapped product into said packing container when said wrapped product has passed said quality control; and rejecting said wrapped product when said wrapped product has failed said quality control. Performing the wrapped-product quality control method as part of a wrapped-product packing method guarantees that the packed wrapped products have passed the quality control test.

In an advantageous embodiment said step of rejecting said wrapped product comprises removing said wrapped product.

In another advantageous embodiment said step of packing said wrapped product comprises using a handling device to provide said wrapped product into said packing container, for instance, a gripping device for picking up said wrapped product..

In yet another advantageous embodiment said step of packing said wrapped product comprises localizing said wrapped product using said infrared-sensitive imaging device. Such embodiment efficiently employs the infrared-sensitive imaging device both for quality control and for localizing purposes.

In yet another aspect the invention provides a wrapped-product quality control device for quality control of a wrapped product, said wrapped product comprising a product in a wrapper, said device comprising an infrared-sensitive imaging device configured and arranged for capturing infrared radiation from a wrapped product on a measuring background, said product having a product temperature different from a measuring background temperature of said measuring background, and said wrapper having a wrapper temperature; and a computer configured and arranged for providing an image of said product or of said wrapped product from said infrared radiation captured with said infrared-sensitive imaging device, and for analysing said image for quality control of said wrapped product. Such device is capable to perform the wrapped-product quality control method according to the invention.

In an embodiment providing an image of said product comprises dividing an area captured by said infrared-sensitive imaging device into a two-dimensional matrix of pixels; assigning a pixel temperature to each pixel based on a measured distribution of infrared radiation associated with said pixel; selecting a threshold temperature in between said product temperature and said wrapper temperature or in between said wrapper temperature and said measuring background temperature, said product temperature being in a product temperature range that at one end is delimited by said threshold temperature; selecting pixels having an associated pixel temperature being in said product temperature range; and building said image from said selected pixels.

In a further embodiment analysing said image comprises comparing said image with a reference image.

In an advantageous embodiment the wrapped-product quality control device comprises a conveyer for conveying said wrapped product, said conveyer providing said measuring background.

In another advantageous embodiment the device comprises a conveyer with an open structure for conveying said wrapped product, said conveyer providing said wrapped product over a measuring surface having a temperature different from said product temperature and different from a temperature of said conveyer, said measuring surface providing said measuring background through said open structure of said conveyer.

In yet another aspect the invention provides a wrapped-product packing device for packing wrapped products into a packing container, said device comprising the wrapped product quality control device according to the invention; a packing station for packing wrapped products that have passed said quality control of said wrapped product quality control device into said packing container. Such device is capable to perform the wrapped-product packing method according to the invention.

In an advantageous embodiment the wrapped-product packing device comprises a removing mechanism for removing a wrapped product that has not passed said quality control of said wrapped product quality control device.

In another advantageous embodiment said packing station and/or said removing mechanism comprises a handling device for handling said wrapped product, for instance, a gripping device constructed and arranged for picking said wrapped product.

In yet another embodiment said wrapped-product packing device is configured and arranged such that said handling device comprises a gripping device configured and arranged for picking up said wrapped product based on a position of said wrapped product determined using said infrared-sensitive imaging device.

In embodiments of the methods and devices according to the invention, said product is a frozen product.

In other embodiments of the methods and devices according to the invention, said frozen product is an ice cream.

In yet other embodiments of the methods and devices according to the invention, said wrapper is a non-metallic wrapper. A non-metallic wrapper generally has a low heat conduction and therefore will not easily take the temperature of the product, which allows a more straightforward discrimination of wrapper and product.

In yet other embodiments of the invention said wrapper is a metallic wrapper, which may have advantageous properties for containment purposes of the product within the wrapper.

### BRIEF DESCRIPTION OF THE DRAWINGS

Further features and advantages of the invention will become apparent by a description of the invention by way of non-limiting and non-exclusive embodiments. Embodiments of the invention will be described with reference to the accompanying drawings, in which same reference symbols indicate like or same parts, and in which
Figure 1a shows an ice cream on a stick within a wrapper, the ice cream not presenting any integrity or other quality defects;
Figure 1b shows an image of the ice cream and its stick shown in figure 1a as determined using infrared radiation measured with an infrared imaging device;
Figure 1c shows an image of the wrapped ice cream of figure 1a as determined using infrared radiation measured with an infrared imaging device;
Figures 2a, 2b and 2c correspond to figures 1a, 1b and 1c, respectively, but present a defective ice cream in two pieces;
Figures 3a, 3b and 3c correspond to figures 1a, 1b and 1c, respectively, but present a defective ice cream having a stick that is connected to the ice cream at a wrong angle;
Figures 4a, 4b and 4c correspond to figures 1a, 1b and 1c, respectively, but present a defective ice cream missing a part;
Figures 5a, 5b and 5c correspond to figures 1a, 1b and 1c, respectively, but present a defective ice cream having a broken stick;
Figures 6a, 6b and 6c correspond to figures 1a, 1b and 1c, respectively, but present a defective wrapped ice cream having the stick sticking out of the wrapper;
Figure 7 shows a wrapped-product packing device having a wrapped product quality control device, both according to the invention;
Figures 8a and 8b show diagrams of product, wrapper, measuring background and threshold temperatures, and a product temperature range; and
Figure 9 shows an image of an ice cream in a wrapper with the threshold temperature set close to the temperature of the ice cream.

### DETAILED DESCRIPTION OF EMBODIMENTS

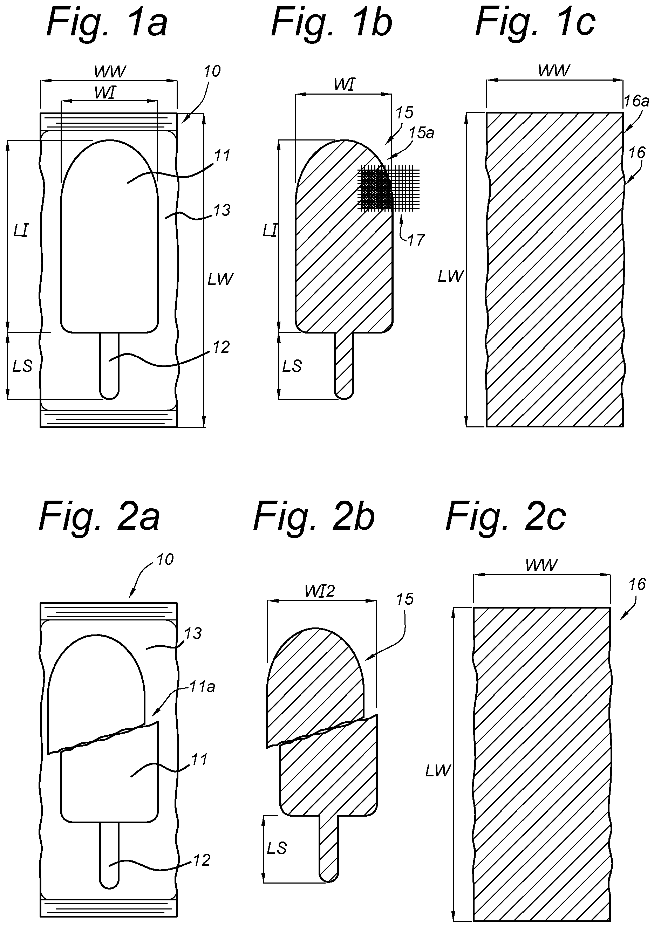

A product in the form of an ice cream 11 on a stick 12 is shown in figure 1a. The figure shows the ice cream to have one stick, but it may also be an ice cream on a double stick or an ice cream without a stick. The ice cream 11 is wrapped in a wrapper 13. In the embodiment shown the wrapper is a non-metallic plastic wrapper in the form of a bag. However, the wrapper may also take the form of a box, such as a carton or plastic box. The ice cream in its wrapper provides a wrapped ice cream 10. In general, it provides a wrapped product 10. In the embodiment shown, the ice cream 11 has a length LI and a width WI, and its stick 12 has a length LS. The wrapper 13 has a length LW and a width WW. In the remainder of the description the product or ice cream is referred to by reference symbol 11. However, the ice cream product 11 may also include the stick 12, which should be apparent from its context.

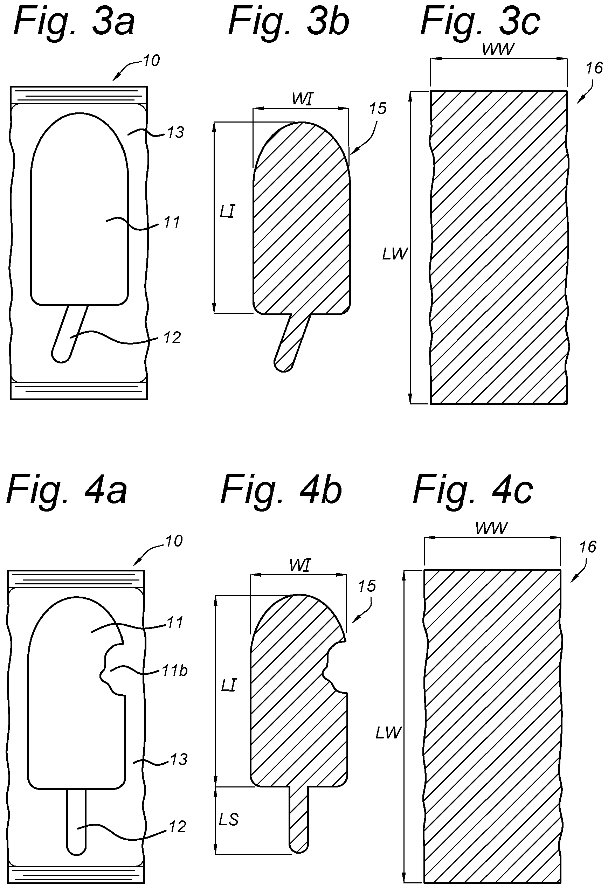

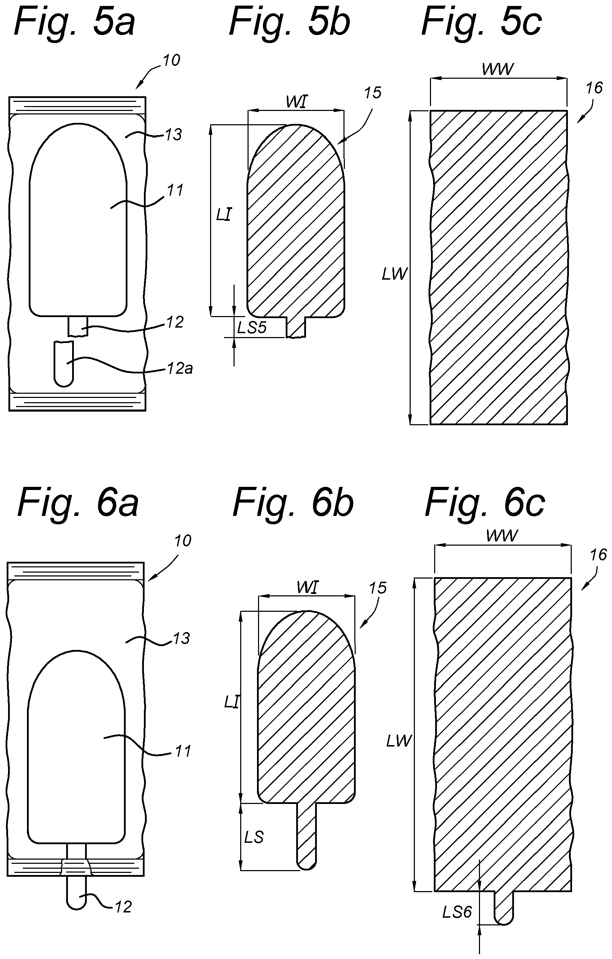

Figures 2a, 3a, 4a, 5a and 6a show defective wrapped ice creams 10. In figure 2a the ice cream is cracked or broken into two parts, and shows a crack 11a. The ice cream of figure 3a has its stick 12 connected at a wrong angle. In figure 4a the ice cream shows missing part 11b. The stick 12 of the ice cream of figure 5a is broken into two parts, having a broken off part 12a. In figure 6a the ice cream is erroneously wrapped and has its stick 12 sticking out of its wrapper 13. One likes to recognize such defective wrapped products and prevent them from shipping for sale.

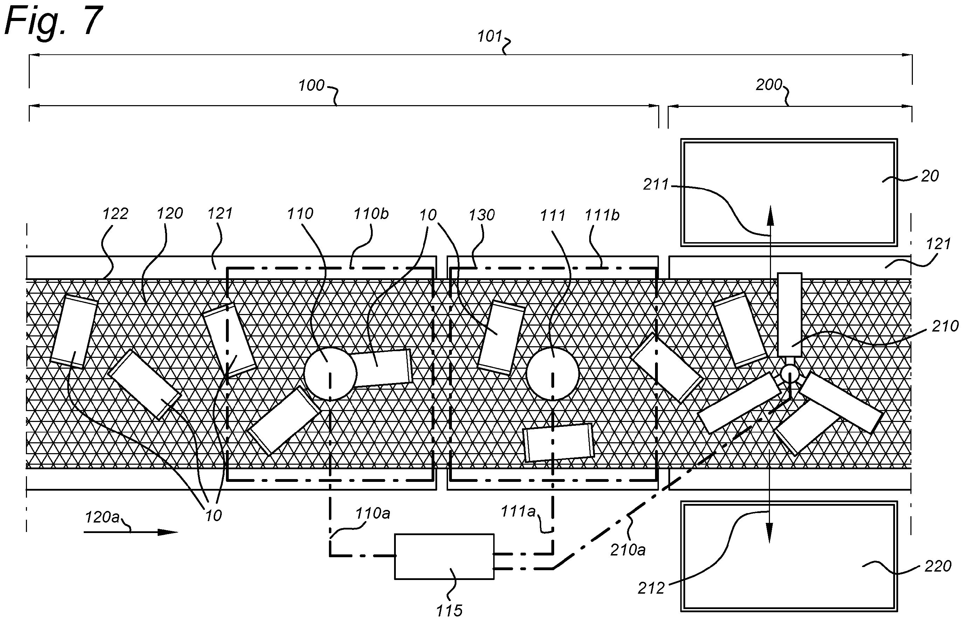

Figure 7 shows a wrapped-product packing apparatus or device 101 having a wrapped-product quality control apparatus or device 100 and a packing station 200. Without packing station 200 the figure would only show a wrapped-product quality control apparatus or device 100. Quite a few, but not all wrapped ice creams (wrapped products) are identified by reference symbol 10 in figure 7.

The wrapped-product quality control device 100 of the wrapped-product packing device 101 comprises infrared-sensitive imaging devices or cameras 110, 111. Such imaging devices 110, 111 are capable of location-resolved detecting infrared radiation radiated by wrapped products 10 and their surroundings. The embodiment is shown to have two infrared-sensitive imaging devices 110, 111 mainly for illustrative purposes, although it may have two such imaging devices in practice. A practical embodiment can also have only one such imaging device or even more than two of such imaging devices. A signal generated by the imaging devices 110, 111 is passed over connecting lines 110a, 111a to a computer 115 for further processing and handling.

Wrapped ice creams 10 are transported by a conveyer 120 and are passed underneath the imaging devices 110, 111 in a conveying direction 120a. In the embodiment shown, the conveyer comprises a conveying belt 122 with an open structure in the form of a web or plurality of strings made of rubber or plastic (or any other applicable material) and presenting openings in the web or in between the plurality of strings. The conveying web or plurality of strings 122 are passed over rollers (not shown) for guidance and exerting a driving force. The wrapped ice creams are supported by the conveying web or plurality of strings.

In an alternative embodiment the conveyer may comprise a conveyer belt with a closed surface. Preferably such belt with a closed surface has a low thermal conductivity to provide a good measuring background having a temperature that differs from the wrapped ice cream, or any other wrapped hot or cold product. A belt of a silicone material can be employed for this purpose.

The ice creams 11 are frozen and will therefore be colder than the packing device 101 and the surroundings thereof. The part of the wrapper 13 not in direct contact with the ice cream will generally be warmer than the ice cream since it will have been heated due to contact with the conveyer 120 and the surrounding air. Infrared radiation radiated by the wrapped ice cream 10 will be detected by infrared-sensitive imaging device 110 when the wrapped ice cream comes into the capturing range 110b of imaging device 110. The imaging device detects infrared radiation within its capturing range in a location-resolved manner and can therefore separately detect such radiation radiated by the ice cream, its wrapper and the background of the ice cream, which represents a measuring background. For imaging device 110 the measuring background is given by the conveying web or plurality of strings and a plate 121 as part of the conveyer 120 below the conveying web or strings 122. The web or strings and the plate 121 are at a surrounding temperature, which thus represents a measuring background temperature of the measuring background.

The imaging devices 110, 111 divide their capturing ranges 110b, 111b into a two-dimensional grid or matrix of pixels. Such array of pixels 17 is partly and schematically shown in figure 1b. For each pixel 17 the imaging devices measure a distribution of infrared radiation radiated by an area associated with that pixel. An area having a certain temperature radiates infrared radiation according to a specific wavelength distribution of that radiation. The area radiates infrared radiation at a specific relative intensity at an associated wavelength interval in relation to intensities in other wavelength intervals, the intensity distribution being associated with the temperature of that area.

Having measured the wavelength distribution of infrared radiation, one can therefore assign a temperature to the measured area and associated pixel 17. A temperature can thus be assigned for each pixel in the capturing range of the imaging device. Such analysis and assignment of a temperature to each pixel is done by computer 115 to which signals corresponding to the measurements of the imaging device are passed over connecting lines 110a, 111a.

Part of the wrapper will be positioned in between an imaging device and the ice cream during imaging. In case that part of the wrapper is in contact with the ice cream it will take the temperature of the ice cream. There be also be an isolating layer of air or another gas in between the ice cream and that part of the wrapper, which may cause that part of the wrapper to have a higher temperature than the ice cream. Especially in case of a non-metallic wrapper the infrared radiation of the ice cream will pass the wrapper and will be sensed by the imaging device. Since the ice cream will have a larger mass and volume than the part of the wrapper in between ice cream and imaging device, the infrared spectrum sensed will generally be dominated by the infrared radiation from the ice cream, so that it can be discriminated by the imaging device.

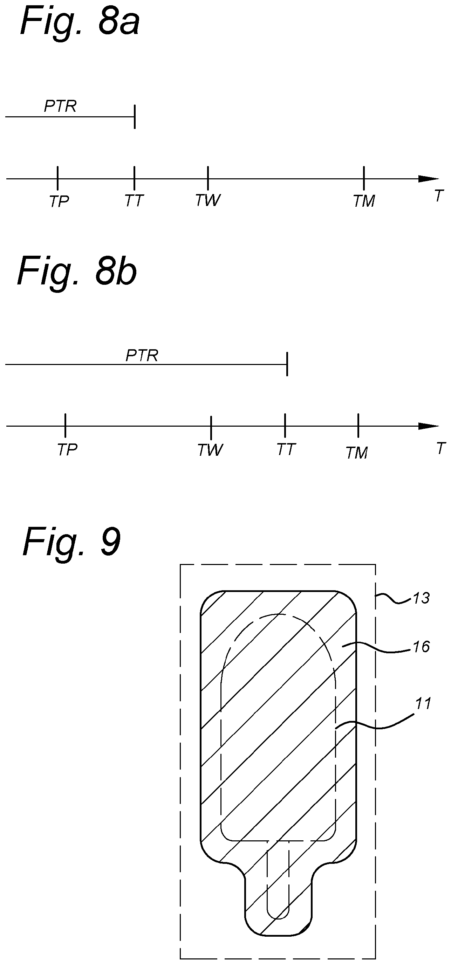

In the analysis a threshold temperature TT is selected. Such a threshold temperature can be selected in between a temperature TP of the ice cream or product and a temperature TW of part of the wrapper not in between ice cream and imaging device and thus not in direct contact with the ice cream, or in between a temperature TW of part of the wrapper not in between imaging device and ice cream (and thus not in direct contact with the ice cream), which will be shortly referred to as the wrapper temperature TW, and a measuring background temperature TM of the measuring background. A product temperature range PTR can be defined such that it comprises the temperature of the ice cream TP and that the range at one end is delimited by the threshold temperature TT. Figure 8a shows a product temperature range PTR for a threshold temperature TT in between product or ice cream temperature TP and wrapper temperature TW. Figure 8b shows a product temperature range PTR for a threshold temperature TT in between wrapper temperature TW and measuring background temperature TM. For best results the wrapper 13 is a non-metallic wrapper, which does not screen the electromagnetic infrared radiation from the inside of the wrapper and does not easily take the temperature of the product 11.

In the analysis of the signal from imaging device 110 the threshold temperature TT is selected in between wrapper temperature TW and ice cream temperature TP. For the situation in capturing range 110b of imaging device 110 the wrapper temperature TW will be equal or almost equal to measuring background temperature TM. Pixels having an associated pixel temperature in the product temperature range PTR are selected by computer 115 and an image is build from such pixels. Such image will be representative of the ice cream. Figures 1b, 2b, 3b, 4b, 5b and 6b show such images and the various defects in the ice creams corresponding to figures 2b, 3b, 4b and 5b become nicely visible. Crack 11a may show in the image of figure 2b when the separation between both parts of the ice cream is large enough.

In distinguishing images of defective ice creams the computer can compare the image with a reference image 15a as represented by the image of a non-defective ice cream in figure 1a. Such comparison and distinguishing methods by computer analysis are generally known and will not be further explained. The computer may also check on certain parameters of the images, such as the length LI of the ice cream 11, the width WI of the ice cream and the length LS of the stick 12. Figure 2b shows that the width WI2 of the corresponding defective ice cream is larger than the width WI of the reference image 15a, and figure 5b shows that the length LS5 of the stick of the corresponding ice cream is shorter than stick length LS of the reference image 15a.

Having passed underneath imaging device 110 the wrapped products or ice creams 10 come into the capturing range 111b of imaging device 111. In the area of capturing range 111b a measuring plate 130 is provided underneath the conveyer web or plurality of strings. The temperature of measuring plate 130 is set a temperature that is elevated with respect to the temperature of the conveyer. The measuring plate 130 provides the measuring background having a measuring background temperature of the measuring plate. Since the wrapped product 10 will only spend a relatively short time above measuring plate 130, the wrapper 13 will not heat to the temperature of the measuring plate but substantially remain at the temperature of the conveyer before arriving above the measuring plate 130.

A same measurement and analysis as described for imaging device 110 can be done. However, since the ice cream temperature TP, wrapper temperature TW and measuring background temperature TM are different, a threshold temperature TT can now be selected in between TP and TW or in between TW and TM, as represented by both figures 8a and 8b, respectively. The images of figures 1b, 2b, 3b, 4b, 5b and 6b can be derived by setting the threshold temperature TT in between TP and TW. Further, the images of figures 1c, 2c, 3c, 4c, 5c and 6c can be derived by setting the threshold temperature TT in between TW and TM. Since the threshold temperature for imaging device 111 can be set in between TP and TW and in between TW and TM, the imaging device 110 can be dispensed with in the embodiment shown in figure 7.

The images of figures 1c, 2c, 3c, 4c, 5c and 6c correspond to the wrapped product or ice cream 10. The images of figures 2c, 3c, 4c and 5c all are identical to the reference image 16a of the non-defective wrapped product in figure 1c. The image in figure 6c deviates from the reference image 16a in figure 1c because the stick of the corresponding ice cream sticks out of the wrapper, which can be distinguished using computer 115 by comparing these images.

Based on the analysis of computer 115 the wrapped ice creams corresponding to figures 2a, 3a, 4a, 5a and 6a fail the quality control and can be rejected in a next step so they will not be shipped for sale. The rejection step may comprise removing the wrapped product.

Having passed imaging device 111 and its corresponding capture range 111b the wrapped ice creams 10 arrive at packing station 200. The packing station comprises a handling device that is embodied as a gripper 210 for picking up wrapped ice creams from the conveyer 120 which have passed quality control. The gripper can locate the individual ice creams based on the location of the ice cream on the conveyer as determined using one or both imaging devices 110, 111 and the speed of the conveyer, all under the control of computer 115. Gripper 210 is therefore connected to computer 115 by connecting line 210a.

Gripper 210 can pick up individual wrapped ice creams 10 for packing them into a packing container 20, such as a cardboard box, that can hold a plurality of wrapped ice creams. After having picked up a wrapped ice cream the gripper is moved in direction 211 towards packing container 20. Wrapped ice creams can be packed in the packing container in any known fashion, which will not be further described.

Based on the location information of individual wrapped ice creams 10 and quality information on whether they have passed quality control or not, individual wrapped ice creams can be rejected at the packing station by not packing such wrapped ice creams into the packing container 20. The gripper can pick up such rejected wrapped ice creams and move in direction 212 to provide them in a separate storage location or waste bin 220. Gripper 210 may also ignore such rejected wrapped ice creams and have them moved further by conveyer 120 to a waste location or any other location for handling. Such rejected ice creams may be provided into a waste bin by dropping of the conveyer at the conveyer end, which is not shown in the drawings.

In another embodiment the ice cream is wrapped in a metallic wrapper that may not pass (enough) radiation from the ice cream within the wrapper, so that the ice cream cannot be imaged as such. However, the wrapper of the wrapped ice cream will have a lower temperature when an ice cream is inside as compared to a situation in which no ice cream is contained within the wrapper. The wrapper will be cooled through direct contact with the ice cream or through radiation or convection. This allows identifying defective wrapped products in which no ice cream is contained within the wrapper from wrapped products having an ice cream within the wrapper. When no ice cream is contained within the wrapper, the wrapper will take the temperature of the surroundings and the measuring background TM. A threshold temperature TT is set in between the wrapper temperature TW of a wrapped ice cream and the measuring background temperature. Non-defective products are then identified and handled in a similar fashion as described above.

Figure 9 shows an image 16 of a wrapper in which an ice cream is contained. The threshold temperature is set close to a temperature of the ice cream so that an image of part of the wrapper closest to the ice cream is created. The wrapper temperature will generally increase in a direction moving away from the ice cream. Figure 9 also shows in dashed lines the contour of the ice cream 11 within the wrapper and of the wrapper 13. No image will be created in case no ice cream is contained inside the wrapper. Such defective products can therefore not be localized by the infrared imaging devices. Conveyers with belts having either open or closed structures can be employed, as has been described earlier.

When the threshold temperature is set at a higher temperature, an image filling the whole contour of the wrapper will be provided. Such image will comparable to the ones shown in figures 1c, 2c, 3c, 4c and 5c. However, at setting a higher threshold temperature there is also a larger chance of labelling a defective product as a non-defective product.

The invention has been described for wrapped ice creams, but can be employed as well for any other wrapped cold product or even any wrapped product of which the temperature differs from a temperature of the surrounding environment.

## Claims

1. A wrapped-product quality control method comprising
- providing a wrapped product (10) comprising a product (11, 12) in a wrapper (13);
- supplying said wrapped product on a measuring background (120, 130) in a capture range (110b, 111b) of an infrared-sensitive imaging device (110, 111), said product (11, 12) having a product temperature (TP) different from a measuring background temperature (TM) of said measuring background (120, 121, 130), and said wrapper (13) having a wrapper temperature (TW);
- capturing with said infrared-sensitive imaging device (110, 111) infrared radiation from said wrapped product (10) and said measuring background;
- providing an image (15, 16) of said product (11, 12) and/or of said wrapped product (10) from said infrared radiation captured with said infrared-sensitive imaging device; and
- analysing said image for quality control of said wrapped product (10).

2. The method according to claim 1, wherein said wrapped product (10) is supplied on a conveyer (120), said conveyer providing said measuring background.

3. The method according to claim 1 or 2, wherein said wrapped product is supplied by a conveyer with an open structure over a measuring surface (130) having a temperature different from said product temperature (TP) and different from a temperature of said conveyer (120), said measuring surface providing said measuring background through said open structure of said conveyer.

4. The method according to any one of the preceding claims, wherein said step of supplying said wrapped product (10) is performed shortly after said product (11, 12) has been wrapped in said wrapper (13) such that said wrapper temperature (TW) is different from said product temperature (TP).

5. The method according to any one of the preceding claims, wherein said step of providing said image (16, 17) comprises
- dividing an area (110b, 111b) captured by said infrared-sensitive imaging (110, 111) device into a two-dimensional matrix of pixels (17);
- assigning a pixel temperature to each pixel (17) based on a measured distribution of infrared radiation associated with said pixel;
- selecting a threshold temperature (TT) in between said product temperature (TP) and said wrapper temperature (TW) or in between said wrapper temperature (TW) and said measuring background temperature (TM), said product temperature (TP) being in a product temperature range (PTR) that at one end is delimited by said threshold temperature (TT);
- selecting pixels (17) having an associated pixel temperature being in said product temperature range (PTR); and
- building said image (15, 16) from said selected pixels (17).

6. The method according to any one of the preceding claims, wherein said step of analysing comprises comparing said image (15, 16) with a reference image (15a, 16a).

7. A wrapped-product packing method for packing a wrapped product (10) into a packing container (20), said method comprising
- the wrapped product quality control method according to any one of the preceding claims;
- packing said wrapped product (10) into said packing container (20) when said wrapped product has passed said quality control, in an embodiment comprising using a handling device (210) to provide said wrapped product into said packing container (20), for instance, a gripping device for picking up said wrapped product, in another embodiment comprising localizing said wrapped product using said infrared-sensitive imaging device (110, 111); and
- rejecting said wrapped product (10) when said wrapped product has failed said quality control, in an embodiment rejecting said wrapped product comprises removing said wrapped product.

8. A wrapped-product quality control device (100) for quality control of a wrapped product, said wrapped product (10) comprising a product (11, 12) in a wrapper (13), **characterized in that** said device comprises:
- an infrared-sensitive imaging device (110, 111) configured and arranged for capturing infrared radiation from a wrapped product (10) on a measuring background (120, 130), said product (11, 12) having a product temperature (TP) different from a measuring background temperature (TM) of said measuring background, and said wrapper (13) having a wrapper temperature (TW); and
- a computer (115) configured and arranged for providing an image (15, 16) of said product (11, 12) or of said wrapped product (10) from said infrared radiation captured with said infrared-sensitive imaging device, and for analysing said image for quality control of said wrapped product.

9. The device according to claim 8, wherein providing an image (15, 16) of said product (11, 12) comprises
- dividing an area (110b, 111b) captured by said infrared-sensitive imaging (110, 111) device into a two-dimensional matrix of pixels (17);
- assigning a pixel temperature to each pixel (17) based on a measured distribution of infrared radiation associated with said pixel;
- selecting a threshold temperature (TT) in between said product temperature (TP) and said wrapper temperature (TW) or in between said wrapper temperature (TW) and said measuring background temperature (TM), said product temperature (TP) being in a product temperature range (PTR) that at one end is delimited by said threshold temperature (TT);
- selecting pixels (17) having an associated pixel temperature being in said product temperature range (PTR); and
- building said image (15, 16) from said selected pixels (17).

10. The device according to claim 8 or 9, wherein analysing said image comprises comparing said image (15, 16) with a reference image (15a, 16a).

11. The device according to any one of claims 8 to 10, wherein said device comprises a conveyer (120) for conveying said wrapped product (10), said conveyer providing said measuring background.

12. The device according to any one of claims 8 to 11, wherein said device comprises a conveyer (120) with an open structure for conveying said wrapped product (10), said conveyer providing said wrapped product over a measuring surface (130) having a temperature different from said product temperature (TP) and different from a temperature of said conveyer (120), said measuring surface providing said measuring background through said open structure of said conveyer.

13. A wrapped-product packing device (101) for packing wrapped products (10) into a packing container (20), **characterized in that** said device comprises:
- the wrapped product quality control device (100) according to any one of claims 11 to 15;
- a packing station (200) for packing wrapped products (10) that have passed said quality control of said wrapped product quality control device into said packing container (20);
- optionally comprising a removing mechanism for removing a wrapped product (10) that has not passed said quality control of said wrapped product quality control device (100).

14. The device according to claim 13, wherein said packing station (200) and/or said removing mechanism comprises a handling device (210) for handling said wrapped product (10), for instance, a gripping device constructed and arranged for picking said wrapped product, optionally said wrapped-product packing device (101) being configured and arranged such that said handling device comprises a gripping device (210) configured and arranged for picking up said wrapped product (10) based on a position of said wrapped product determined using said infrared-sensitive imaging device (110, 111).

15. The method or the device according to any one of the preceding claims, wherein said product (11, 12) is a frozen product, for example said frozen product is an ice cream (11, 12).

## Patentansprüche

1. Verfahren zur Qualitätskontrolle für ein verpacktes Produkt, umfassend:
- Bereitstellen eines verpackten Produkts (10), das ein Produkt (11, 12) in einer Verpackung (13) umfasst;
- Zuführen des verpackten Produkts auf eine Messunterlage (120, 130) in einem Erfassungsbereich (110b, 111b) einer infrarotempfindlichen Abbildungsvorrichtung (110, 111), wobei das Produkt (11, 12) eine Produkttemperatur (TP) aufweist, die eine andere als eine Messunterlagentemperatur (TM) der Messunterlage (120, 121, 130) ist, und die Verpackung (13) eine Verpackungstemperatur (TW) aufweist;
- Erfassen einer Infrarotstrahlung aus dem verpackten Produkt (10) und der Messunterlage mit der infrarotempfindlichen Abbildungsvorrichtung (110, 111);
- Bereitstellen eines Bildes (15, 16) des Produkts (11, 12) und/oder des verpackten Produkts (10) aus der Infrarotstrahlung, die mit der infrarotempfindlichen Abbildungsvorrichtung erfasst wird; und
- Analysieren des Bildes zur Qualitätskontrolle des verpackten Produkts (10).

2. Verfahren nach Anspruch 1, wobei das verpackte Produkt (10) auf einem Förderband (120) zugeführt wird, wobei das Förderband die Messunterlage bereitstellt.

3. Verfahren nach Anspruch 1 oder 2, wobei das verpackte Produkt von einem Förderband mit einer offenen Struktur über einer Messoberfläche (130) mit einer Temperatur zugeführt wird, die eine andere als die Produkttemperatur (TP) ist und eine andere als eine Temperatur des Förderbandes (120) ist, wobei die Messoberfläche die Messunterlage durch die offene Struktur des Förderbandes bereitstellt.

4. Verfahren nach einem der vorhergehenden Ansprüche, wobei der Schritt des Zuführens des verpackten Produkts (10), kurz nachdem das Produkt (11, 12) in der Verpackung (13) verpackt wurde, ausgeführt wird, so dass die Verpackungstemperatur (TW) eine andere als die Produkttemperatur (TP) ist.

5. Verfahren nach einem der vorhergehenden Ansprüche, wobei der Schritt des Bereitstellens des Bildes (16, 17) Folgendes umfasst
- Aufteilen eines Bereichs (110b, 111b), der von der infrarotempfindlichen Abbildungsvorrichtung (110, 111) erfasst wird, in eine zweidimensionale Matrix von Pixeln (17);
- Zuordnen einer Pixeltemperatur zu jedem Pixel (17) basierend auf einer gemessenen Verteilung einer Infrarotstrahlung, die dem Pixel zugeordnet ist;
- Auswählen einer Schwellentemperatur (TT) zwischen der Produkttemperatur (TP) und der Verpackungstemperatur (TW) oder zwischen der Verpackungstemperatur (TW) und der Messunterlagentemperatur (TM), wobei die Produkttemperatur (TP) in einem Produkttemperaturbereich (PTR) liegt, der an einem Ende durch die Schwellentemperatur (TT) begrenzt ist;
- Auswählen von Pixeln (17) mit einer zugehörigen Pixeltemperatur, die in dem Produkttemperaturbereich (PTR) liegt; und
- Erstellen des Bildes (15, 16) aus den ausgewählten Pixeln (17).

6. Verfahren nach einem der vorhergehenden Ansprüche, wobei der Schritt des Analysierens das Vergleichen des Bildes (15, 16) mit einem Referenzbild (15a, 16a) umfasst.

7. Verfahren zum Verpacken eines verpackten Produkts zum Verpacken eines verpackten Produkts (10) in einen Verpackungsbehälter (20), wobei das Verfahren Folgendes umfasst
- das Verfahren zur Qualitätskontrolle für ein verpacktes Produkt nach einem der vorhergehenden Ansprüche;
- Verpacken des verpackten Produkts (10) in den Verpackungsbehälter (20), wenn das verpackte Produkt die Qualitätskontrolle bestanden hat, in einer Ausführungsform umfassend das Verwenden einer Bedienungseinrichtung (210) zum Bereitstellen des verpackten Produkts in dem Verpackungsbehälter (20), zum Beispiel einer Greifvorrichtung zum Aufnehmen des verpackten Produkts, in einer anderen Ausführungsform umfassend das Lokalisieren des verpackten Produkts unter Verwendung der infrarotempfindlichen Abbildungsvorrichtung (110, 111); und
- Zurückweisen des verpackten Produkts (10), wenn das verpackte Produkt die Qualitätskontrolle nicht bestanden hat, wobei in einer Ausführungsform das Zurückweisen des verpackten Produkts das Entfernen des verpackten Produkts umfasst.

8. Vorrichtung (100) zur Qualitätskontrolle für ein verpacktes Produkt zur Qualitätskontrolle eines verpackten Produkts, wobei das verpackte Produkt (10) ein Produkt (11, 12) in einer Verpackung (13) umfasst, **dadurch gekennzeichnet, dass** die Vorrichtung Folgendes umfasst:
- eine infrarotempfindliche Abbildungsvorrichtung (110,111), die zum Erfassen von Infrarotstrahlung aus einem verpackten Produkt (10) auf einer Messunterlage (120, 130) konfiguriert und eingerichtet ist, wobei das Produkt (11, 12) eine Produkttemperatur (TP) aufweist, die eine andere als eine Messunterlagentemperatur (TM) der Messunterlage ist, und die Verpackung (13) eine Verpackungstemperatur (TW) aufweist; und
- einen Computer (115), der zum Bereitstellen eines Bildes (15, 16) des Produkts (11, 12) oder des verpackten Produkts (10) aus der Infrarotstrahlung, die mit der infrarotempfindlichen Abbildungsvorrichtung erfasst wird, und zum Analysieren des Bildes zur Qualitätskontrolle des verpackten Produkts konfiguriert und eingerichtet ist.

9. Vorrichtung nach Anspruch 8, wobei das Bereitstellen eines Bildes (15, 16) des Produkts (11, 12) Folgendes umfasst
- Aufteilen eines Bereichs (110b, 111b), der von der infrarotempfindlichen Abbildungsvorrichtung (110, 111) erfasst wird, in eine zweidimensionale Matrix von Pixeln (17);
- Zuordnen einer Pixeltemperatur zu jedem Pixel (17) basierend auf einer gemessenen Verteilung einer Infrarotstrahlung, die dem Pixel zugeordnet ist;
- Auswählen einer Schwellentemperatur (TT) zwischen der Produkttemperatur (TP) und der Verpackungstemperatur (TW) oder zwischen der Verpackungstemperatur (TW) und der Messunterlagentemperatur (TM), wobei die Produkttemperatur (TP) in einem Produkttemperaturbereich (PTR) liegt, der an einem Ende durch die Schwellentemperatur (TT) begrenzt ist;
- Auswählen von Pixeln (17) mit einer zugehörigen Pixeltemperatur, die in dem Produkttemperaturbereich (PTR) liegt; und
- Erstellen des Bildes (15, 16) aus den ausgewählten Pixeln (17).

10. Vorrichtung nach Anspruch 8 oder 9, wobei das Analysieren des Bildes das Vergleichen des Bildes (15, 16) mit einem Referenzbild (15a, 16a) umfasst.

11. Vorrichtung nach einem der Ansprüche 8 bis 10, wobei die Vorrichtung ein Förderband (120) zum Befördern des verpackten Produkts (10) umfasst, wobei das Förderband die Messunterlage bereitstellt.

12. Vorrichtung nach einem der Ansprüche 8 bis 11, wobei die Vorrichtung ein Förderband (120) mit einer offenen Struktur zum Befördern des verpackten Produkts (10) umfasst, wobei das Förderband das verpackte Produkt über einer Messoberfläche (130) mit einer Temperatur bereitstellt, die eine andere als die Produkttemperatur (TP) ist und eine andere als eine Temperatur des Förderbandes (120) ist, wobei die Messoberfläche die Messunterlage durch die offene Struktur des Förderbandes bereitstellt.

13. Vorrichtung (101) zum Verpacken eines verpackten Produkts zum Verpacken von verpackten Produkten (10) in einen Verpackungsbehälter (20), **dadurch gekennzeichnet, dass** die Vorrichtung Folgendes umfasst:
- die Vorrichtung (100) zur Qualitätskontrolle für ein verpacktes Produkt nach einem der Ansprüche 11 bis 15;
- eine Verpackungsstation (200) zum Verpacken von verpackten Produkten (10), welche die Qualitätskontrolle der Vorrichtung zur Qualitätskontrolle für ein verpacktes Produkt bestanden haben, in den Verpackungsbehälter (20);
- wahlweise umfassend einen Entfernungsmechanismus zum Entfernen eines verpackten Produkts (10), das die Qualitätskontrolle der Vorrichtung (100) zur Qualitätskontrolle für ein verpacktes Produkt nicht bestanden hat.

14. Vorrichtung nach Anspruch 13, wobei die Verpackungsstation (200) und/oder der Entfernungsmechanismus eine Bedienungseinrichtung (210) zum Handhaben des verpackten Produkts (10), zum Beispiel eine Greifvorrichtung, die zum Aufnehmen des verpackten Produkts konstruiert und eingerichtet ist, umfasst, wobei die Vorrichtung (101) zum Verpacken eines verpackten Produkts wahlweise derart konfiguriert und eingerichtet ist, dass die Bedienungseinrichtung eine Greifvorrichtung (210) umfasst, die zum Aufnehmen des verpackten Produkts (10) basierend auf einer Position des verpackten Produkts, die unter Verwendung der infrarotempfindlichen Abbildungsvorrichtung (110, 111) bestimmt wird, konfiguriert und eingerichtet ist.

15. Verfahren oder Vorrichtung nach einem der vorhergehenden Ansprüche, wobei das Produkt (11, 12) ein gefrorenes Produkt ist, zum Beispiel das gefrorene Produkt eine Eiscreme (11, 12) ist.

## Revendications

1. Procédé de contrôle de qualité de produit emballé comprenant
- la fourniture d'un produit emballé (10) comprenant un produit (11, 12) dans un emballage (13) ;
- l'amenée dudit produit emballé sur un arrière-plan de mesure (120, 130) dans une plage de capture (110b, 11 1b) d'un dispositif d'imagerie sensible au rayonnement infrarouge (110, 111), ledit produit (11, 12) ayant une température de produit (TP) différente d'une température d'arrière-plan de mesure (TM) dudit arrière-plan de mesure (120, 121, 130), et ledit emballage (13) ayant une température d'emballage (TW) ;
- la capture avec ledit dispositif d'imagerie sensible au rayonnement infrarouge (110, 111) d'un rayonnement infrarouge émanant dudit produit emballé (10) et dudit arrière-plan de mesure ;
- la fourniture d'une image (15, 16) dudit produit (11, 12) et/ou dudit produit emballé (10) à partir dudit rayonnement infrarouge capturé avec ledit dispositif d'imagerie sensible au rayonnement infrarouge ; et
- l'analyse de ladite image aux fins de contrôle de qualité dudit produit emballé (10).

2. Procédé selon la revendication 1, dans lequel ledit produit emballé (10) est amené sur un transporteur (120), ledit transporteur fournissant ledit arrière-plan de mesure.

3. Procédé selon la revendication 1 ou 2, dans lequel ledit produit emballé est amené par un transporteur doté d'une structure ouverte sur une surface de mesure (130) ayant une température différente de ladite température de produit (TP) et différente d'une température dudit transporteur (120), ladite surface de mesure fournissant ledit arrière-plan de mesure au travers de ladite structure ouverte dudit transporteur.

4. Procédé selon l'une quelconque des revendications précédentes, dans lequel ladite étape d'amenée dudit produit emballé (10) est effectué peu après que ledit produit (11, 12) a été emballé dans ledit emballage (13) afin que ladite température d'emballage (TW) soit différente de ladite température de produit (TP).

5. Procédé selon l'une quelconque des revendications précédentes, dans lequel ladite étape de fourniture de ladite image (16, 17) comprend
- la division d'une zone (110b, 111b) capturée par ledit dispositif d'imagerie (110, 111) sensible au rayonnement infrarouge en une matrice bidimensionnelle de pixels (17) ;
- l'affectation d'une température de pixel à chaque pixel (17) sur la base d'une distribution mesurée d'un rayonnement infrarouge associé audit pixel ;
- la sélection d'une température seuil (TT) entre ladite température de produit (TP) et ladite température d'emballage (TW) ou entre ladite température d'emballage (TW) et ladite température d'arrière-plan de mesure (TM), ladite température de produit (TP) se trouvant dans une plage de température de produit (PTR) qui est délimitée à une extrémité par ladite température seuil (TT) ;
- la sélection de pixels (17) ayant une température de pixel associée qui se trouve dans ladite plage de température de produit (PTR) ; et
- la construction de ladite image (15, 16) à partir desdits pixels sélectionnés (17).

6. Procédé selon l'une quelconque des revendications précédentes, dans lequel ladite étape d'analyse comprend une comparaison de ladite image (15, 16) avec une image de référence (15a, 16a).

7. Procédé de conditionnement de produit emballé pour conditionner un produit emballé (10) dans un récipient de conditionnement (20), ledit procédé comprenant
- le procédé de contrôle de qualité de produit emballé selon l'une quelconque des revendications précédentes ;
- le conditionnement dudit produit emballé (10) dans ledit récipient de conditionnement (20) lorsque ledit produit emballé a réussi ledit contrôle de qualité, comprenant, dans un mode de réalisation, l'utilisation d'un dispositif de manipulation (210) pour fournir ledit produit emballé dans ledit récipient de conditionnement (20), par exemple, d'un dispositif de préhension pour saisir ledit produit emballé, comprenant, dans un autre mode de réalisation, la localisation dudit produit emballé au moyen dudit dispositif d'imagerie sensible au rayonnement infrarouge (110, 111) ; et
- le rejet dudit produit emballé (10) lorsque ledit produit emballé a échoué audit contrôle de qualité, dans un mode de réalisation, le rejet dudit produit emballé comprenant l'élimination dudit produit emballé.

8. Dispositif de contrôle de qualité de produit emballé (100) pour le contrôle de qualité d'un produit emballé, ledit produit emballé (10) comprenant un produit (11, 12) dans un emballage (13), **caractérisé en ce que** ledit dispositif comprend :
- un dispositif d'imagerie sensible au rayonnement infrarouge (110, 111) configuré et agencé pour capturer un rayonnement infrarouge émanant d'un produit emballé (10) sur un arrière-plan de mesure (120, 130), ledit produit (11, 12) ayant une température de produit (TP) différente d'une température d'arrière-plan de mesure (TM) dudit arrière-plan de mesure, et ledit emballage (13) ayant une température d'emballage (TW) ; et
- un ordinateur (115) configuré et agencé pour fournir une image (15, 16) dudit produit (11, 12) ou dudit produit emballé (10) à partir dudit rayonnement infrarouge capturé avec ledit dispositif d'imagerie sensible au rayonnement infrarouge, et pour analyser ladite image aux fins de contrôle de qualité dudit produit emballé.

9. Dispositif selon la revendication 8, dans lequel la fourniture d'une image (15, 16) dudit produit (11, 12) comprend
- la division d'une zone (110b, 111b) capturée par ledit dispositif d'imagerie (110, 111) sensible au rayonnement infrarouge en une matrice bidimensionnelle de pixels (17) ;
- l'affectation d'une température de pixel à chaque pixel (17) sur la base d'une distribution mesurée d'un rayonnement infrarouge associé audit pixel ;
- la sélection d'une température seuil (TT) entre ladite température de produit (TP) et ladite température d'emballage (TW) ou entre ladite température d'emballage (TW) et ladite température d'arrière-plan de mesure (TM), ladite température de produit (TP) se trouvant dans une plage de température de produit (PTR) qui est délimitée à une extrémité par ladite température seuil (TT) ;
- la sélection de pixels (17) ayant une température de pixel associée qui se trouve dans ladite plage de température de produit (PTR) ; et
- la construction de ladite image (15, 16) à partir desdits pixels sélectionnés (17).

10. Dispositif selon la revendication 8 ou 9, dans lequel l'analyse de ladite image comprend une comparaison de ladite image (15, 16) avec une image de référence (15a, 16a).

11. Dispositif selon l'une quelconque des revendications 8 à 10, dans lequel ledit dispositif comprend un transporteur (120) pour transporter ledit produit emballé (10), ledit transporteur fournissant ledit arrière-plan de mesure.

12. Dispositif selon l'une quelconque des revendications 8 à 11, dans lequel ledit dispositif comprend un transporteur (120) doté d'une structure ouverte pour transporter ledit produit emballé (10), ledit transporteur fournissant ledit produit emballé sur une surface de mesure (130) ayant une température différente de ladite température de produit (TP) et différente d'une température dudit transporteur (120), ladite surface de mesure fournissant ledit arrière-plan de mesure au travers de ladite structure ouverte dudit transporteur.

13. Dispositif de conditionnement de produit emballé (101) pour conditionner des produits emballés (10) dans un récipient de conditionnement (20), **caractérisé en ce que** ledit dispositif comprend :
- le dispositif de contrôle de qualité de produit emballé (100) selon l'une quelconque des revendications 11 à 15 ;
- un poste de conditionnement (200) pour conditionner les produits emballés (10) qui ont réussi ledit contrôle de qualité dudit dispositif de contrôle de qualité de produit emballé dans ledit récipient de conditionnement (20) ;
- comprenant facultativement un mécanisme d'élimination pour éliminer un produit emballé (10) qui n'a pas réussi ledit contrôle de qualité dudit dispositif de contrôle de qualité de produit emballé (100).

14. Dispositif selon la revendication 13, dans lequel ledit poste de conditionnement (200) et/ou ledit mécanisme d'élimination comprend un dispositif de manipulation (210) pour manipuler ledit produit emballé (10), par exemple, un dispositif de préhension conçu et agencé pour saisir ledit produit emballé, ledit dispositif de conditionnement de produit emballé (101) étant facultativement configuré et agencé de sorte que ledit dispositif de manipulation comprenne un dispositif de préhension (210) configuré et agencé pour saisir ledit produit emballé (10) sur la base d'une position dudit produit emballé déterminée au moyen dudit dispositif d'imagerie sensible au rayonnement infrarouge (110, 111).

15. Procédé ou dispositif selon l'une quelconque des revendications précédentes, dans lequel ledit produit (11, 12) est un produit surgelé, par exemple ledit produit surgelé est une crème glacée (11, 12).
